Europäisches Patentamt

European Patent Office

Office européen des brevets

(19)

(11) Veröffentlichungsnummer: **0 465 773 A2**

# EUROPÄISCHE PATENTANMELDUNG

(12)

(21) Anmeldenummer: **91106289.1**

(22) Anmeldetag: **19.04.91**

(51) Int. Cl.5: **B29C 47/76**, B29C 47/40

(30) Priorität: **07.07.90 DE 4021751**

(43) Veröffentlichungstag der Anmeldung:
**15.01.92 Patentblatt 92/03**

(84) Benannte Vertragsstaaten:
**BE DE FR GB IT**

(71) Anmelder: **HERMANN BERSTORFF Maschinenbau GmbH An der Breiten Wiese 3/5 W-3000 Hannover 61(DE)**

(72) Erfinder: **Schaarschmidt, Dipl.-Ing. Gneisenaustrasse 82 W-3000 Hannover 1(DE)**

(54) **Entgasungsextruder.**

(57) Es wird ein Verfahren und ein Doppelschnecken-extruder zur Entgasung einer thermoplastischen, monomerhaltigen Kunststoffschmelze vorgestellt, bei dem die Kunststoffschmelze und ein Schleppmittel unter einem Druck miteinander vermischt werden, der einen Übergang des Schleppmittels von seiner flüssigen in seine gasförmige Phase verhindert. Der dafür notwendige Druck im Extruder ist mit Hilfe einer brillenförmigen Druckblende erzielbar, die über Zentrierelemente kraftschlüssig mit dem Extrudergehäuse verbunden ist und den Verarbeitungsraum des Extruders bis auf maximal zwei Durchlaßöffnungen für das Extrudat stromabwärts absperrt.

Fig. 3

Die Erfindung betrifft einen Doppelschneckenextruder gemäß dem Oberbegriff des Anspruchs 1.

Bei der Herstellung von thermoplastischen Kunststoffen besteht häufig das Bedürfnis, Restmonomere aus dem Ausgangskunststoff zu entfernen. Soll beispielsweise eine Verpackungsfolie für Lebensmittel aus Polystyrol extrudiert werden, so darf aus lebensmittelrechtlichen und damit aus medizinischen Gründen der Anteil von gesundheitlich schädlichen Restmonomeren einen bestimmten Grenzwert nicht übersteigen. Da das üblicherweise in einem Extruder einzuspeisende Polystyrol einen Anteil von bis zu 100.000 ppm monomeres Styrol aufweist, bedarf es einer sehr effektiven Entgasungsvorrichtung, um den um etwa zwei Zehnerpotenzen niedrigeren Grenzwert für Restmonomere im Produkt erreichen zu können.

Zur Entgasung von derartigen Kunststoffen ist seit langem bekannt, bei Einschneckenextrudern eine Einspritzstelle für ein Schleppmittel vorzusehen, mit dem die Kunststoffschmelze im Extruder vermischt wird. Dieses Schleppmittel (in der Regel Wasser) sorgt dann in einem der Einspritzstelle stromabwärts nachgeordneten Entgasungsbereich dafür, daß die Schmelze bei einer Druckabsenkung aufschäumt. Die durch die Schaumblasen verursachte Vergrößerung der freien Oberfläche der Schmelze bewirkt so eine für weite Anwendungsbereiche ausreichende Entgasung der Schmelze.

Die mit solchen Einschneckenextrudern erzielbaren Restmonomeranteile im Produkt reichen aber für viele Gebiete nicht aus, insbesondere dann nicht, wenn die Kunststoffprodukte beispielsweise mit Lebensmitteln direkt in Kontakt geraten.

So wurde in der DE-OS 26 25 609 vorgeschlagen, einen Doppelschneckenextruder für die Entgasung von restmonomerhaltigen Schmelzen vorzusehen. Bei einem Doppelschneckenextruder treten aber aufgrund seiner baulichen Eigenarten besondere Probleme auf. Vor allem der Zwickelbereich des Extruders, also der Bereich, in dem der Querschnitt des Verarbeitungsraumes des Extruders eine Engstelle aufweist, sorgt dafür, daß sich nicht der gewünschte Druck in der Schmelze aufbauen läßt, der für eine optimale Durchmischung der Schmelze mit dem Schleppmittel Wasser nötig ist.

Zur Lösung dieses Problems wurde in dieser Druckschrift vorgeschlagen, vor und nach der Einspritzstelle für das Wasser Einstell- und Sperringe vorzusehen, die auf den Extruderschnecken befestigt sind und mit diesen rotieren. Dabei soll der Durchmesser des stromaufwärtigen Einstellringes im wesentlichen derselbe sein wie der des Außendurchmessers einer Extruderschnecke, der Durchmesser des von der Einspritzstelle stromabwärts gelegenen Sperringes aber etwas größer sein als der des Einstellringes.

Mit Hilfe eines in den Verarbeitungsraum ragenden, im wesentlichen V-förmigen und an die Kreisbögen der Einstellringe angepaßten Stellzylinders läßt sich der Zwickelbereich einseitig einengen und dadurch in gewisser Weise die Fördermenge zwischen der Zylinderinnenwand und den Einstellringen und damit der Druck im Extruder regulieren. Ein solchermaßen in den Einspritzbereich zwischen den Einstell- und Sperringen gelangter Schmelzestrom wird hier mit dem eingespritzen Wasser mit Hilfe von Knetelementen auf den Extruderschnecken in Kontakt gebracht. Das Wasser verdampft beim Kontakt mit der Schmelze und führt zu einem Aufschäumen im benachbarten Entgasungsbereich des Extruders.

Zwar ist die Entgasungseffektivität eines solchen Extruders besser als die eines Doppelschnekkenextruders ohne die vorgeschlagenen Maßnahmen zur Steuerung des in den Knetbereich gelangenden Schmelzestroms, nachteilig ist aber, daß das eingespritzte Wasser sofort bei seiner Berührung mit der Schmelze verdampft und daher nur eine sehr schlechte Durchmischung von Wasser und Schmelze stattfindet.

Demgemäß liegt der Erfindung die Aufgabe zugrunde, ein Verfahren und einen Doppelschnekkenextruder vorzuschlagen, bei dem der Entgasungswirkungsgrad durch eine bessere Vermischung der Schmelze mit dem eingespritzten Schleppmittel noch weiter gesteigert werden kann.

Die Lösung dieser Aufgabe ergibt sich aus den kennzeichnenden Merkmalen des Hauptanspruchs. Weiterbildungen und vorteilhafte Ausgestaltungen der Erfindung sind den Unteransprüchen zu entnehmen.

Dem Erfindungsgedanken liegt die Erkenntnis zugrunde, daß eine optimale Entgasung der Schmelze nur dann möglich ist, wenn das Treibmittel vollständig und homogen in der Schmelze vermischt wurde. Nur so läßt sich im Entgasungsbereich des Extruders die Schmelze unter möglichst starker Blasenbildung derart stark entgasen, daß die lebensmittelrechtlichen Grenzwerte eingehalten werden können.

Um diese vollständige Vermischung des Wassers mit der Schmelze erreichen zu können, bedarf es einer Erhöhung des Schmelzedruckes auf einen Wert, der über dem Verdampfungsdruck des Schleppmittels liegt. Ist dieser erreicht, lassen sich das Schleppmittel und die Schmelze in flüssiger Phase leicht miteinander vermischen und anschließend unter der Entgasungsöffnung des Extruders unter starker Blasenbildung entspannen. Auf diese Art und Weise wird die Schmelze fast vollständig entgast.

Die notwendige Druckerhöhung der Schmelze läßt sich erfindungsgemäß mit Hilfe einer brillenförmigen Druckblende erreichen, die an einer vorgewählten Stelle im Extruder dicht stromabwärts von der Wassereinspritzstelle austauschbar im Extruder befestigt ist.

Diese Druckblende ist über Zentrierelemente mit dem Extrudergehäuse kraftschlüssig verbunden sperrt den Verarbeitungsraum des Extruders stromabwärts bis auf maximal zwei Durchlaßöffnungen für das Extrudat ab. Insbesondere im für den Druckaufbau wichtigen Zwickelbereich im Verarbeitungsraum des Extruders verhindert das durchgehende Druckblendenblech einen Druckverlust durch das unerwünschte vorzeitige Abströmen der Schmelze in den Expansionsbereich des Extruders.

Die Erfindung läßt sich mit Hilfe der Zeichnung anhand von Ausführungsbeispielen erläutern.

Es zeigen:

Fig. 1    eine schematische Darstellung des Entgasungsdoppelschneckenextruders.

Fig. 2    einen Blick in ein längsseitig aufgeschnittenes Gehäuse des Extruders.

Fig. 3    einen Schnitt AA durch das Extrudergehäuse gemäß Fig. 2.

Fig. 4    eine Ansicht des Extruders gemäß Fig. 2, jedoch in einer anderen Ausführungsform.

Fig. 5    einen Schnitt BB durch das Extrudergehäuse gemäß Fig. 4.

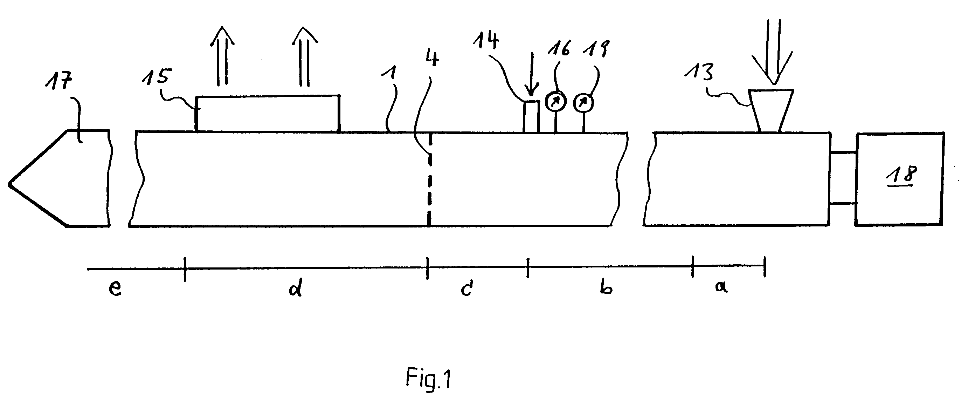

In Fig. 1 ist das Gehäuse 1 eines Entgasungsdoppelschneckenextruders dargestellt, an dem eine Antriebseinheit 18 angeschlossen ist. Über eine Einfüllöffnung 13 ist der Extruder mit einer monomerhaltigen Schmelze oder einem monomerhaltigem Granulat eines Kunststoffs speisbar. Die im Extrudergehäuse rotierenden Extruderschnecken 2, 3 befördern den Kunststoff aus einer Einzugszone a zu einer Verfahrenszone b, in der der Kunststoff plastifiziert und auf den erforderlichen Druck gebracht wird.

Über eine Schleppmitteleinspritzöffnung 14 im Extrudergehäuse 1 ist der Kunststoffschmelze Wasser zuführbar. Dieses Wasser wird im Extruderabschnitt c mit der Kunststoffschmelze bei einem Druck vermischt, der ein Verdampfen des Wassers verhindert und, sofern gewünscht, wird hier der Druck des Gemisches weiter erhöht.

In einer vorteilhaften Ausgestaltung der Erfindung wird der Druck und die Temperatur der Schmelze dicht bei der Einspritzöffnung 14 ständig mit Hilfe von Temperatur- und Drucksensoren 16, 19 ermittelt und als Regelgröße für den Extruderbetrieb verwendet.

Den Abschluß der Verfahrenszone c bildet die Druckblende 4, die in dieser Zeichnung nur phantomhaft dargestellt ist.

Hinter der Druckblende 4 entspannt sich das Gemisch aus Kunststoff und Wasser unter starker Blasenbildung in der Entgasungszone d. Dadurch entsteht eine sehr große freie Kunststoffoberfläche, aus der die Monomere und das Wasser entgasen können. Um den Entgasungsvorgang zu unterstützen, ist in an sich bekannter Weise an der Entgasungsöffnung 15 des Extrudergehäuses 1 eine nicht dargestellte Vakuumpumpe angeschlossen.

Nachdem die Schmelze vom Wasser und von den Monomeren weitestgehend befreit ist, kann sie in einem Extruderabschnitt e erneut unter Druck gebracht werden, um anschließend durch ein Extrusionswerkzeug 17 den Extruder zu verlassen.

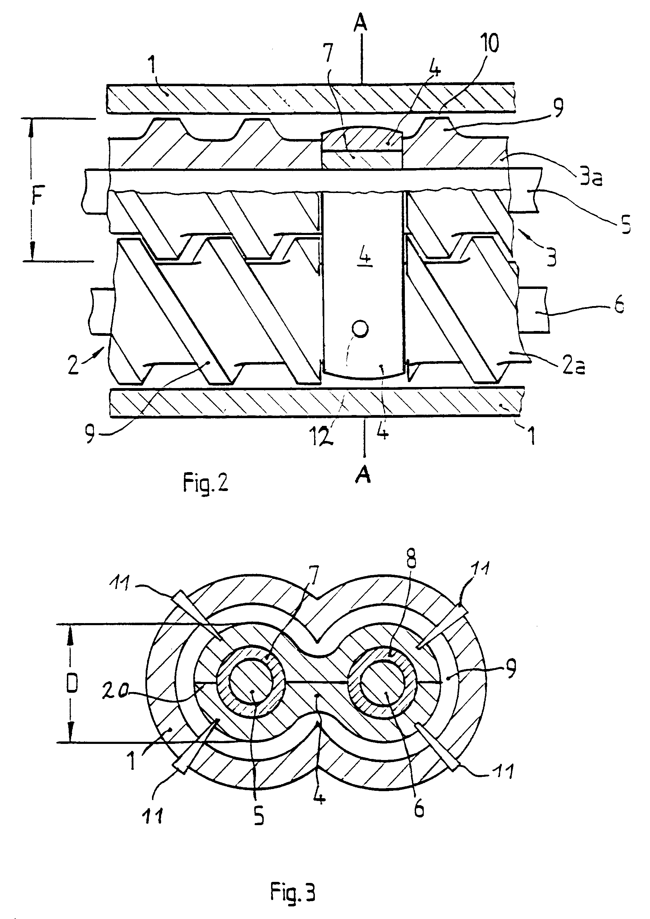

In Fig. 2 ist in einem Ausführungsbeispiel der Erfindung das Extrudergehäuse 1 in dem Bereich aufgeschnitten dargestellt, in dem die Druckblende 4 angeordnet ist. Die Druckblende 4 verbindet an dieser Stelle die Schnecken 2, 3 derart formschlüssig, daß über den Zwickelbereich des Verarbeitungsraumes 10 keine Schmelze abfließen kann. Vielmehr wird zwischen der Druckblende 4 und der Innenwand des Extrudergehäuses eine brillenförmige Durchlaßöffnung 21 geschaffen, durch die das Schmelze-Wasser-Gemisch in die Entgasungszone d des Extruders gelangen kann (Figur 3).

In diesem Beispiels sind die Extruderschnecken 2, 3 aus Schneckenschäften 5, 6 und darauf aufgezogen und mit diesen verspannten Schneckenhülsen 2a, 3a aufgebaut. Zur Aufnahme der Druckblende 4 sind die Schneckenhülsen 2a, 3a im Blendenbereich unterbrochen und mit auswechselbaren Verschleiß- oder Dichtringen 7, 8 auf die Schneckenschäfte 5, 6 aufgeschoben. Durch diese Maßnahme läßt sich die Druckblende 4 beim Zusammenbau und beim Einziehen der Schnecken 2, 3 in das Extrudergehäuse derart gut positionieren, daß die von außen durch das Extrudergehäuse einführbaren Zentrierelemente 11 die in der Druckblende 4 vorgesehenen Bohrungen 12 exakt treffen.

Die Zentrierelemente 11 sind in vorteilhafter Ausgestaltung der Erfindung konisch ausgebildet, um ihr Einführen in die Bohrungen 12 der Druckblende 4 zu erleichtern. Zudem ist vorgesehen, daß die Zentrierelemente 11 bezogen auf die Drehachse einer Extruderschnecke 2, 3 paarweise zueinander einen Winkel von vorzugsweise 40 bis 180° bilden. Der Teilbereich des Extrudergehäuses, der zur Fixierung der Druckblende 4 dient, kann in vorteilhafter Weise als Druckblenden-Gehäuseteil gefertigt6 sein, der beim Einsatz einer solchen Druckblende 4 als zusätzlicher Gehäsueabschnitt in ein bereits vorhandenes Extrudergehäuse einbaubar ist.

In Abhängigkeit von den gewünschten Extrusionsbedingungen ist der Teildurchmesser D und die Tiefe der Druckblende 4 zu wählen. In der Regel wird dieser Durchmesser D so gewählt sein, daß er kleiner oder gleich dem Durchmesser F einer Extruderschnecke ist.

In einer nicht dargestellten Variante der Erfindung lassen sich die Verschleiß- oder Dichtringe 7, 8 auch auf den nun aber in ihrem Durchmesser reduzierten Schneckenhülsen 2a, 3a lagern.

Zur besseren Montierbarkeit der Druckblende 4 auf den Schnecken 2, 3 kann diese entlang einer die Drehachsen der Schnecken 2, 3 verbindenden Geraden 20 zweigeteilt und über Verbindungselemente mit einander verbindbar sein.

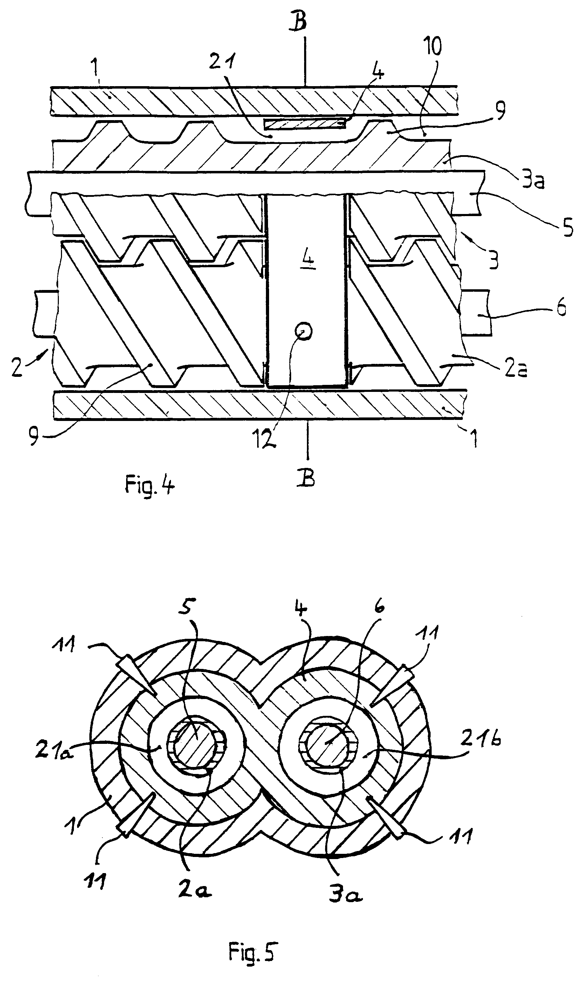

In den Figuren 4, 5 ist eine weitere Möglichkeit dargestellt, wie der Erfindungsgegenstand ausführbar ist. Auch hier werden die Schnecken 2, 3 des Extruders in dessen Gehäuse 1 von einer brillenförmigen Druckblende 4 umfaßt, die von Zentrierelementen 11 mit dem Gehäuse 1 kraftschlüssig verbunden sind. Allerdings schließt die Druckblende 4 formschlüssig mit der Innenwand des Extrudergehäuses ab, überdeckt aber auch hier den Zwickelbereich des Verarbeitungsraumes 10.

Um dem Gemisch aus Schmelze und Schleppmittel einen Durchlaß zur Entgasungszone zu schaffen, erstreckt sich die Druckblende 4 nur soweit auf die hier stegfreien Schneckenhülsen 2a, 3a zu, daß je Extruderschnecke 2, 3 eine Durchlaßöffnung 21a, 21b ausgebildet wird. Die radiale Weite eines solchen Durchlasses ist frei wählbar, darf aber nicht so groß sein, daß sich die beiden Durchlässe 21a, 21b unter Bildung eines Zwickels berühren (Figur 5).

Außerdem besteht auch hier die Möglichkeit, die Schneckenhülsen 2a, 3a im Bereich der Druckblende 4 zu unterbrechen und die Durchlaßöffnungen 21a, 21b bis auf die Oberfläche der Schneckenschäfte 5, 6 reichen zu lassen.

**Bezugszeichenliste:**

| | | |
|---|---|---|
| 1 = | Gehäuse |
| 2 = | Extruderschnecke |
| 2a = | Schneckenhülse |
| 3 = | Extruderschnecke |
| 3a = | Schneckenhülse |
| 4 = | Druckblende |
| 5 = | Schneckenschaft |
| 6 = | Schneckenschaft |
| 7 = | Verschleißring / Dichtring |
| 8 = | Verschleißring / Dichtring |
| 9 = | Schneckensteg |
| 10 = | Verarbeitungsraum |
| 11 = | Zentrierelement |
| 12 = | Bohrung |
| 13 = | Einfüllöffnung |
| 14 = | Schleppmitteleinspritzöffnung |
| 15 = | Entgasungsöffnung |
| 16 = | Drucksensor |
| 17 = | Extruderdüse |
| 18 = | Antrieb |
| 19 = | Temperatursensor |
| 20 = | Trennlinie zwischen oberer und unterer Druckblendenhälfte |
| 21 = | Durchlaßöffnung in der Druckblende |
| 21a = | Durchlaßöffnung in der Druckblende |
| 21b = | Durchlaßöffnung in der Druckblende |
| a = | Einzugszone |
| b = | Plastifizier- und Druckaufbauzone |
| c = | Mischzone |
| d = | Entgasungszone |
| e = | Druckaufbauzone |
| D = | Teildurchmesser der Druckblende |
| F = | Durchmesser Extruderschnecke |

**Patentansprüche**

1. Verfahren zum Entgasen einer thermoplastischen und monomerhaltigen Kunststoffschmelze in einem Doppelschneckenextruder,

   gekennzeichnet durch folgende Verfahrensschritte,
   a) Einfüllen des monomerhaltigen Kunststoffs in Form einer Schmelze oder eines Granulates in die Einfüllöffnung eines Extruders,
   b) Fördern, Plastifizieren und Aufbauen eines Schmelzedruckes durch die Extruderschnecken auf einen Wert, der ein Verdampfen eines einzuspritzenden Schleppmittels bei der herrschenden Schmelzetemperatur verhindert,
   c) Einspritzen des Schleppmittels in den Verarbeitungsraum des Extruders,
   d) Vermischen des flüssigen Schleppmittels mit der Kunststoffschmelze,
   e) Entspannung, Fördern und Aufschäumen des Gemisches aus Kunststoff und dem Schleppmittel unter Absenkung des Mischungsdruckes,
   f) Entgasen der Kunststoffschmelze von den Monomeren und dem Schleppmittel,
   g) Fördern und Aufbauen eines Extrusionsdruckes, unter dem die entgaste Kunststoffschmelze den Extruder verläßt.

2. Verfahren gemäß Anspruch 1,

   **dadurch gekennzeichnet,**

   daß als thermoplastischer Kunststoff Polystyrol mit monomeren Styrolresten verwendet wird.

3. Verfahren gemäß Anspruch 1,

   **dadurch gekennzeichnet,**

   daß als Schleppmittel Wasser verwendet wird.

4. Verfahren gemäß Anspruch 1,

**dadurch gekennzeichnet,**

daß der Schmelzedruck und die Schmelzetemperatur dicht bei der Einspritzstelle für das Schleppmittel gemessen wird.

5. Verfahren gemäß Anspruch 1,

   **dadurch gekennzeichnet,**

   daß das Monomer und das verdampfte Schleppmittel aus dem Extruder abgesaugt werden.

6. Verfahren gemäß Anspruch 1,

   **dadurch gekennzeichnet,**

   daß der Druck des Gemisches aus Schmelze und Schleppmittel nach dem Einspritzen des Schleppmittels weiter erhöht wird.

7. Doppelschneckenextruder zur Durchführung des Verfahrens gemäß Anspruch 1, bestehend aus einem Extrudergehäuse mit zwei einen Verarbeitungsraum bildenden hohlzylindrischen Bohrungen, die sich parallel zur Längsachse des Extrudergehäuses erstrecken und sich schneiden, zwei in diesem Gehäuse um ihre Längsachsen drehbar und antriebsseitig gelagerten Extruderschnecken, einer Einfüllöffnung für den zu verarbeitenden thermoplastischen Kunststoff, wenigstens einer Einspritzöffnung im Gehäuse für die Einspritzung eines Schleppmittels, wenigstens einer Entgasungsöffnung, einem Extrusionskopf sowie einem Bauteil, das zur Erhöhung des Druckes der Schmelze im Extruder stromaufwärts vor der Entgasungsöffnung angeordnet ist,

   **dadurch gekennzeichnet,**

   daß dieses Bauteil eine brillenförmige Druckblende (4) ist,
   daß die Druckblende (4) über Zentrierelemente (11) kraftschlüssig mit dem Extrudergehäuse (1) verbunden ist, und daß die Druckblende (4) den Verarbeitungsraum (10) bis auf maximal zwei Durchlaßöffnungen (21 bzw. 21a, 21b) für das Extrudat stromabwärts absperrt.

8. Doppelschneckenextruder gemäß Anspruch 7,

   **dadurch gekennzeichnet,**

   daß die Durchlaßöffnung (21) zwischen der Innenwand des Extrudergehäuses (1) und der Druckblende (4) gebildet wird, wobei die Druckblende (4) über Verschleiß- oder Dichtringe (7, 8) auf den Schäften (5, 6) oder den Schneckenhülsen (2a, 3a) formschlüssig aufliegt.

9. Doppelschneckenextruder gemäß Anspruch 7,

   **dadurch gekennzeichnet,**

   daß die Durchlaßöffnungen (21a, 21b) zwischen den Schneckenschäften (5, 6) oder den Schneckenhülsen (2a, 3a) gebildet werden, wobei die Druckblende (4) den Verarbeitungsraum (10) formschlüssig zur Innenwand des Extrudergehäuses (1) abdichtet.

10. Doppelschneckenextruder gemäß den Ansprüchen 8 und 9,

    **dadurch gekennzeichnet,**

    daß die Schneckenhülsen (2a, 3a) im Bereich der Druckblende (4) in ihrem Durchmesser verringert oder unterbrochen ausgeführt sind.

11. Doppelschneckenextruder gemäß Anspruch 7,

    **dadurch gekennzeichnet,**

    daß die Zentrierelemente (11) konisch ausgebildet sind.

12. Doppelschneckenextruder gemäß den Ansprüchen 7 und 11,

    **dadurch gekennzeichnet,**

    daß die Zentrierelemente (11) bezogen auf die Drehachse einer Extruderschnecke (2, 3) paarweise zueinander einen Winkel von vorzugsweise 40 bis 180° bilden.

13. Doppelschneckenextruder gemäß Anspruch 7,

    **dadurch gekennzeichnet,**

    daß die Druckblende (4) entlang einer die Drehachsen der Extruderschnecken (2, 3) verbindenden Geraden (20) zweigeteilt und über Verbindungselemente miteinander verbindbar sind.

14. Doppelschneckenextruder gemäß Anspruch 6,

    **dadurch gekennzeichnet,**

    daß der Teildurchmesser D der Druckblende (4) kleiner oder gleich ist als der Durchmesser F einer Extruderschnecke.

15. Doppelschneckenextruder gemäß Anspruch 7,

**dadurch gekennzeichnet,**

daß die Druckblende (4) über auswechselbare Verschleiß- oder Dichtringe (7, 8) mit den Hülsen (2a, 3a) oder den Schäften (5, 6) der Extruderschnecken (2, 3) form- und/oder kraftschlüssig verbunden ist.

16. Doppelschneckenextruder gemäß Anspruch 9,

**dadurch gekennzeichnet,**

daß die Durchlaßöffnungen (21a, 21b) in der Druckblende (4) derart klein gehalten werden, daß sie im Zwickelbereich des Extruders nicht zu einer einzigen Durchlaßöffnung verschmelzen.

Fig.1

EP 0 465 773 A2

Fig.2

Fig.3

Fig. 4

Fig. 5